(19) Europäisches Patentamt
European Patent Office
Office européen des brevets

(11) **EP 2 033 366 B1**

(12) **EUROPEAN PATENT SPECIFICATION**

(45) Date of publication and mention
of the grant of the patent:
**21.07.2010 Bulletin 2010/29**

(51) Int Cl.:
*H04L 12/24* *(2006.01)*    *H04L 12/26* *(2006.01)*

(21) Application number: **06821000.4**

(86) International application number:
**PCT/IB2006/003405**

(22) Date of filing: **29.11.2006**

(87) International publication number:
**WO 2008/001157 (03.01.2008 Gazette 2008/01)**

(54) **Network node and method for fast traffic measurement and monitoring**

Netzwerkknoten und Verfahren zur schnellen Verkehrsmessung und Überwachung

Noeud de réseau et procédé por une mesure de trafic rapide et une surveillance

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **26.06.2006 US 805813 P**

(43) Date of publication of application:
**11.03.2009 Bulletin 2009/11**

(73) Proprietor: **Telefonaktiebolaget LM Ericsson
(publ)
164 83 Stockholm (SE)**

(72) Inventors:
• **CSASAR, András
H-1125 Budapest (HU)**
• **BADER, Attila
H-2071 Paty (HU)**

(74) Representative: **Mohsler, Gabriele et al
Ericsson GmbH
Ericsson Allee 1
52134 Herzogenrath (DE)**

(56) References cited:
**US-B1- 6 333 917**

• **PAPADOPOULI M ET AL: "Evaluation of short-
term traffic forecasting algorithms in wireless
networks" NEXT GENERATION INTERNET
DESIGN AND ENGINEERING, 2006. NGI '06. 2006
2ND CONFERENCE ON VALENCIA, SPAIN 3-5
APRIL 2006, PISCATAWAY, NJ, USA, IEEE, 3 April
2006 (2006-04-03), pages 102-109, XP010935442
ISBN: 0-7803-9455-0**

**Description**

**TECHNICAL FIELD**

The present invention relates in general to the communications field and, in particular, to a network node (e.g., edge node, router) and a method for providing fast and exact traffic information during normal traffic fluctuations in a network and also during a sudden and big change in the traffic conditions of the network.

**BACKGROUND**

Common acronyms are used in the following description of the prior art and the present invention. For convenience, this glossary is provided:

| | |
|---|---|
| DiffServ | Differentiated Services |
| DoS | Denial of Service |
| EWMA | Exponentially Weighted Moving Average |
| IETF | Internet Engineering Task Force |
| IP | Internet Protocol |
| MA | Moving Average |
| NSIS | Next Steps In Signalling |
| QoS | Quality of Service |
| RFC | Request For Comments |
| RMD | Resource Management in DiffServ |
| RMF | Resource Management Function |
| SWMA | Sliding Window Moving Average |
| TMF | Traffic Monitoring Function |
| VBR | Variable Bit Rate |

In a communications network, the measurement of traffic characteristics (bandwidth, packet loss, delay, or jitter) is an important network management task and it is also important for methods which provide a Quality of Service (QoS) . The characteristics of traffic can be highly variable. For instance, it is well known that Internet traffic is bursty in nature. But, it is not so well known that traffic aggregated by dynamically arriving and leaving telephony sessions in a voice network is also variable, which is especially truce when the telephony sessions themselves are variable (for example, if silence suppression techniques are used then the resulting stream will be a VBR stream which is similar to that of an on/off source). This kind of variation in the traffic characteristics is an inherent property of telephony traffic, and is, therefore, considered normal.

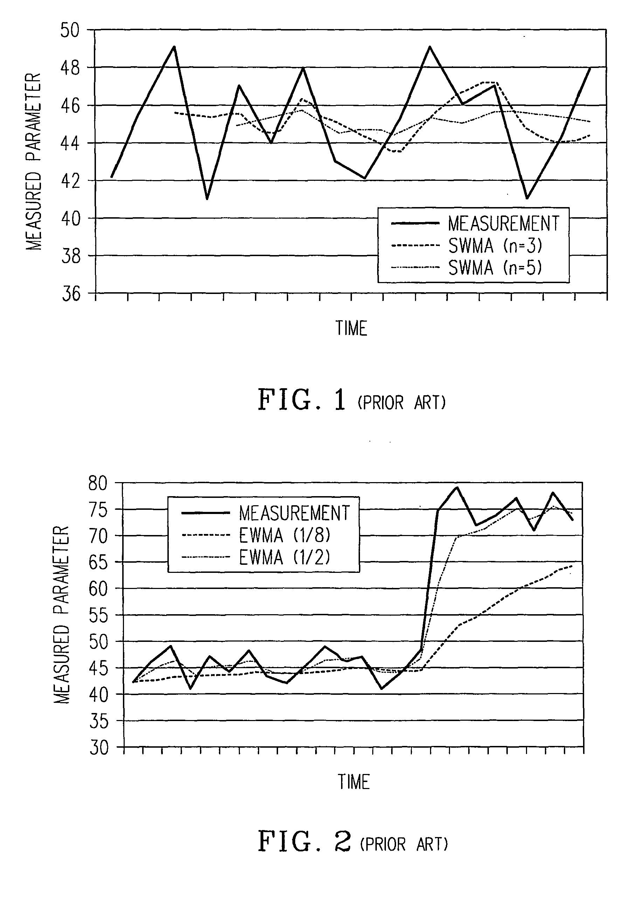

Thus, the communication network's admission or congestion control decisions and alarm indications should not be influenced by this "normal" variation in telephony traffic characteristics. To help accomplish this, the traffic monitoring tools today often implement some sort of moving average technique where the measured values of the traffic characteristics over consecutive time intervals are averaged and smoothed so that the admission or congestion control decisions and alarm indications can be made without being unnecessarily influenced by this "normal" variation in the telephony traffic. Two well known moving average techniques are discussed next with respect to FIGURES 1-2 (PRIOR ART) .

The first technique is known as the sliding window moving average (SWMA) technique where the values of "n" consecutive traffic measurements are averaged after the $i^{th}$ measurement ($m_i$) in accordance with the following equation:

$$avg_i = \frac{\sum\limits_{j=i-n}^{i} m_i}{n} \; . \tag{1}$$

As can be appreciated, a higher "n" in this equation is going to result in a smoother overall resulting average because the most recent measurement has a smaller impact when compared to the previous measurements which are also used in calculating the overall resulting average ($avg_i$) . Of course, the SWMA technique requires that the previous "n" measured values of the traffic characteristic be stored in a memory so as to be able to calculate the overall resulting average ($avg_i$) . FIGURE 1 (PRIOR ART) is a graph which illustrates an actual curve of the measured traffic characteristic and two curves of the overall resulting average of the traffic measurements when different numbers of measured parameters such as n=3 and n=5 are used when implementing the SWMA technique.

The second technique is known as the exponentially weighted moving average (EWMA) technique. In this case, the overall resulting average (avg$_i$) is calculated in accordance with the following equation:

$$avg_i = (1-w) \cdot avg_{i-1} + w \cdot m_i \qquad (2)$$

where $0 < w \leq 1$ is the weight parameter and i is the measurement interval. As can be appreciated, the smaller the weight parameter "w" then the smoother the resulting overall average (avg$_i$) is going to be since the newest measurement has a smaller impact when compared to the previous measurements which are also used in calculating the overall resulting average (avg$_i$) . FIGURE 2 (PRIOR ART) is a graph which illustrates an actual curve of the measured traffic and two curves of the overall resulting average (avg$_i$) of the traffic measurements when different weight parameters of w=1/8 and w=1/2 are used when implementing the EWMA technique.

Unfortunately, these moving average techniques can adapt too fast and have fluctuations to normal changes in the traffic characteristics, or they can be configured not to have fluctuations during normal changes in the traffic characteristics but then they would adapt too slow to any sudden and big changes in the traffic characteristics (see FIGS. 1 and 2). In particular, if the moving average technique is setup to adapt slow then the traffic monitoring tool cannot quickly detect sudden and big changes in the traffic pattern due to a failure (sudden loss of some traffic), re-routing or DoS attacks (sudden increase of traffic demand at some links) . Thus, sudden and big spikes may remain hidden even though network operators probably would like to know about these big spikes (see FIG. 1 when SWMA n=5 and FIG 2 when EWMAw=1/8) . In contrast, if the moving average technique is setup to adapt fast then its output may fluctuate like the actual measurements which can cause the traffic monitoring tool to trigger unnecessary alarms or warnings (see FIG. 1 when SWMA n=3 and FIG 2 when EWMA w=1/2).

As such, the traffic monitoring tools (and admission control systems) are going to have either a slow congestion notification or cause an unnecessary number of flow terminations due to load fluctuations. This is especially problematical in large-scale IP networks which implement IETF's DiffServ architecture (e.g., see S. Blake et.al. "An Architecture for Differentiated Services", RFC 2475, 1998] . In addition, this is problematical in large-scale IP networks which implement IETF's DiffServ's pre-congestion notification protocol (e.g., see B. Brisco at.al. "A Framework for Admission Control over DiffServ using Pre-Congestion Notification", internet Draft, work in progress, 2006 March). Moreover, this is problematical in large-scale IP networks which implement NSIS's RMD protocol (e.g., see: (1) M. Brunner " Requirements for Signaling Protocols", RFC3726, April 2004; (2) A. Bader et. al. "RMD-QOSM: An NSIS QoS Signaling Policy Model for Networks Using Resource Management in DiffServ (RMD)," IETF draft, work in progress; and (3) A. Császár, et al., "Congestion handling in a packet switched network domain", WO2006052174 ). Furthermore, it can be a problem if the traffic monitoring tool's human interface/monitor would hide or not display the sudden and big changes in traffic characteristics which would happen if the moving averages adapted to slow to the sudden and big changes in the traffic characteristics. Accordingly, there is a need to address this shortcoming and other shortcomings associated with traffic monitoring tools (and admission control systems) which utilize moving average techniques (e.g., the SWMA technique or the EWMA technique). This particular need and other needs are addressed by the network node and the method of the present invention.

US 6,333,917 B1 (25 December 2001) discloses a random early detection (RED) method that controls and avoids congestion in a packet network by anticipating congestion and periodically signaling congestion by marking or discarding packets. In one embodiment, there is an enhanced exponentially weighted moving average (EWMA) peak follower which has an input for a connection metric (METRIC_INPUT) for a current connection and an input for the previous value of the EWMA peak follower output (PEAK_ESTIMATE). The EWMA peak follower compares the METRIC_ INPUT to the PEAK_ESTIMATE. If the METRIC_INPUT is greater than or equal to the PEAK ESTIMATE, then the new PEAK_ESTIMATE is the value of the connection metric. If the METRIC_INPUT is less than the PEAK_ESTIMATE, then the output is decayed toward the value of the connection metric.

Papadopouli M. et al. "Evaluation of Short-Term Traffic Forecasting Algorithms in Wireless Networks (3 April 2006) discloses short-term traffic forecasting algorithms used in wireless networks. One model for traffic forecasting is an adaptive moving average algorithm which was motivated by the need to better capture the burstiness of the traffic and the need to adapt to its sudden changes during the forecasting process. The adaptive moving-average algorithm dynamically detects the level shifts (i.e., prominent changes of traffic) in the traffic and establishes a new window size of the recent traffic. A level shift at the current interval (kj) is detected if the confidence intervals of the traffic accessed during a current window ($L_m$) and a new interval ($L_j$) are non-overlapping (level shift criteria). In the case of a new level shift, the current window becomes the new interval ($L_j$) and the algorithm continues to the next interval ($k_{j+1}$).

## SUMMARY

A network node (e.g., edge node, router, network management node), visualization tool and method are recited in independent Claims 1, 8 and 15 that provide fast and exact traffic information during normal traffic fluctuations in a network and also during a sudden and big change in the traffic conditions of the network.

## BRIEF DESCRIPTION OF THE DRAWINGS

A more complete understanding of the present invention may be obtained by reference to the following detailed description when taken in conjunction with the accompanying drawings wherein:

FIGURE 1 (PRIOR ART) is a graph which is used to help explain how a known SWMA technique is used to monitor traffic characteristics within an IP network;

FIGURE 2 (PRIOR ART) is a graph which is used to help explain how a known EWMA technique is used to monitor traffic characteristics within an IP network;

FIGURE 3 is a block diagram of an exemplary IP network which includes nodes (e.g., edge nodes, routers) that implement a traffic measurement method in accordance with the present invention;

FIGURE 4 is a flowchart illustrating the basic steps of the traffic measurement method in accordance with the present invention;

FIGURES 5A and 5B illustrate diagrams of a token bucket which can be used to verify either a significant "up" difference or a significant "down" difference during a determining step within the traffic measurement method in accordance with the present invention;

FIGURE 6 is a simulation graph which is provided to help explain a main advantage of using the traffic measurement method in accordance with the present invention; and

FIGURE 7 is a diagram of a token bucket which is used to help implement a quickly adapting step within the traffic measurement method in accordance with the present invention.

## DETAILED DESCRIPTION

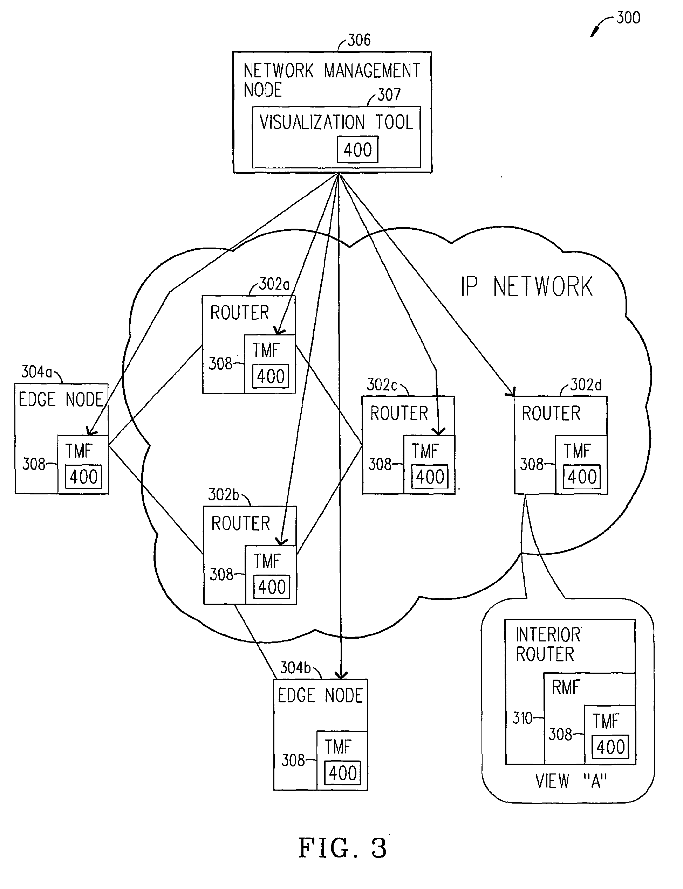

Referring to FIGURE 3, there is shown a block diagram of an exemplary IP network 300 which is used to help explain a traffic measurement method 400 in accordance with the present invention. As shown, the exemplary IP network 300 has multiple routers 302a, 302b, 302c and 302d and multiple edge nodes 304a and 304b (located at the border of the network domain) which are all connected to a network management node 306. Each router 302a, 302b, 302c and 302d and each edge node 304a and 304b has a traffic measurement function (TMF) 308 incorporated therein which functions to measure the desired traffic parameters (note: it is not a requirement to measure the traffic parameters in every one of the routers 302a, 302b, 302c and 302d or the edge nodes 304a and 304b). The network management node 306 functions to control the TMFs 308 and to collect their measured traffic parameters. In the event, that the IP network 300 implements the aforementioned NSIS's RMD protocol then each of the interior routers 302a, 302b, 302c and 302d would have a resource management function (RMF) 310 which contains the TMF 308 (see view "A" in FIGURE 3). A detailed discussion is provided next about how each or selected ones of the routers 302a, 302b, 302c and 302d (in particular their TMF's 308), edge nodes 304a and 304b (in particular their TMF's 308) and the network management node 306 can implement the traffic measurement method 400 and monitor one or more traffic characteristics/parameters in accordance with the present invention.

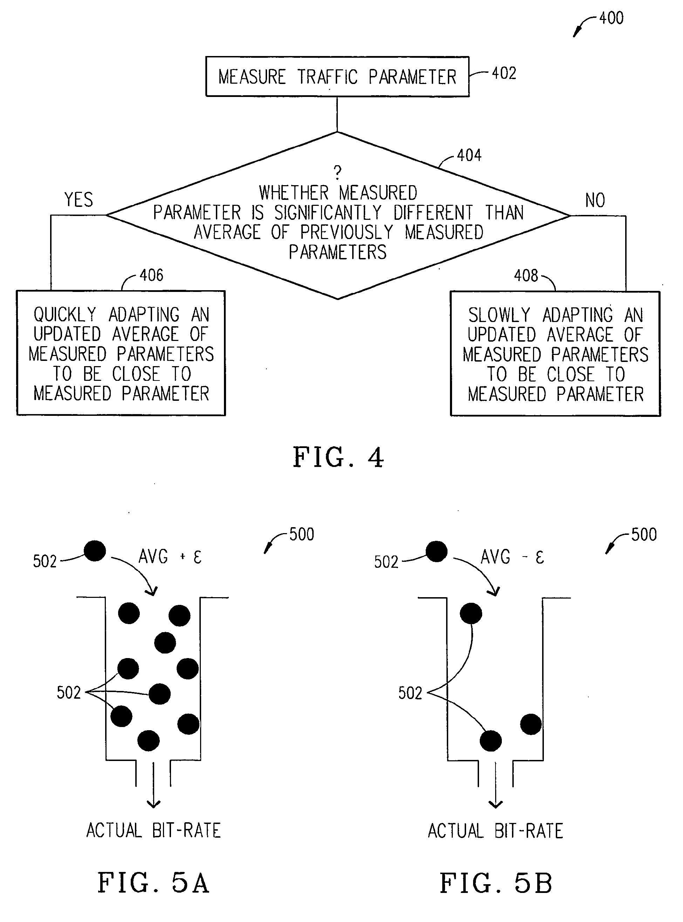

Referring to FIGURE 4, there is a flowchart illustrating the basic steps of the method 400 for monitoring a parameter of traffic in accordance with the present invention. Basically, the method 400 includes the following steps: (1) measuring a traffic parameter ($m_i$) (e.g., the parameter ($m_i$) can be bit-rate, bandwidth, packet loss, link utilization, delay or jitter) (step 402); (2) determining/verifying whether a value of the measured parameter ($m_i$) is significantly different than a value of an average of previously measured parameters ($avg_{i-1}$) (step 404); (2a) if yes, then quickly adapting a value of an updated average of measured parameters ($avg_i$) to be closer to the value of the measured parameter ($m_i$) (step 406); and (2b) if no, then slowly adapting the value of the updated average of measured parameters ($avg_i$) to be closer to the value of the measured parameter ($m_i$) (step 408). A detailed description about the traffic measurement method 400 and in particular steps 404, 406 and 408 is provided next with respect to FIGURES 5-7.

As can be seen, in method 400 after each measurement is made but before determining a value of an updated average of the measured parameters ($avg_i$) a determination is made as to whether a value of the new measurement ($m_i$) indicates a sudden and big change in relation to the value of the average of previously measured parameters ($avg_{i-1}$) (steps 402 and 404). The significance of this difference can be determined in a wide-variety of ways where three exemplary ways are discussed next. First, the difference verification could be relative as follows:

```
If mᵢ > avgᵢ₋₁ * (1 + x%) OR mᵢ < avgᵢ₋₁ * (1 - x%) Then
            …    perform    fast    adaptation    (step
    406--discussed below) …
            Else
                … perform slow adaptation (step 408--using a
    regular moving average technique) …
            EndIf
```

where "x" can be:

- a pre-set constant value,
- a function of the standard deviation if the traffic model is known, or a
- a function of the empirical variance if it can be measured.

Second, the difference verification could an absolute as follows:

```
If mᵢ - avgᵢ₋₁ > X OR avgᵢ₋₁ - mᵢ > X Then

        …    perform    fast.    adaptation    (step
    406--discussed below) …
    Else
        … perform slow adaptation (step 408--using a
    regular moving average technique) …
    EndIf
```

where "X" can be:

- a pre-set constant value,
- a function of the standard deviation if the traffic model is known, or a
- a function of the empirical variance if it can be measured.

Third, if the measured traffic characteristic/parameter ($m_i$) is a bit-rate or link utilization, then the difference verification could be made using an ε sized token bucket 500 (see FIGURES 5A and 5B). The token bucket 500 has some limited capacity to receive so-called tokens 502 which correspond to a single packet, to a byte, or to some fixed amount of bytes. These tokens 502 are placed at a constant rate (reference threshold bit-rate) into the token bucket 500 and then removed at the actual link speed/bit-rate. As such, if the link speed/bit-rate is low (i.e., lower than the threshold) then the token bucket 500 is going to be filled with tokens 502 (see FIGURE 5A). In this case, the token bucket 500 would be used to signify a significant "down" fluctuation when it becomes full because the actual bit-rate is significantly lower than the filling average (avg+E). In contrast, if the link speed/bit-rate is high (i.e., higher than the threshold) then the token bucket 500 is going to be empty of tokens 502 (see FIGURE 5B). In this case, the token bucket 500 would be used to signify a significant "up" fluctuation when it becomes empty because the actual bit-rate is significantly higher than the filling average (avg-ε). In FIGURES 5A and 5B, the "avg" means the last average value of the moving average technique (e.g., SWMA technique or EWMA technique) and the addition of "ε" is required because otherwise the token bucket 500 would be emptied/filled by a slow but long lasting increase/decrease of the observed traffic characteristic/parameter.

In some cases, it may only be important to signal a sudden increase of the traffic characteristic/parameter (e.g., sudden increase of packet loss ratio, sudden increase of utilisation, etc.)(step 404). In these cases, the difference verification would be simplified to take into account the "up" direction and not the "down" direction. As such, the relative difference verification would be as follows:

```
If mᵢ > avgᵢ₋₁ * (1 + x%) Then
                …    perform    fast    adaptation    (step
        406--discussed below) …
        Else
            … perform slow adaptation (step 408--using a
        regular moving average technique) …
        EndIf
```

where "x" can be:

- a pre-set constant value,
- a function of the standard deviation if the traffic model is known, or a
- a function of the empirical variance if it can be measured.

The absolute difference verification would be as follows:

```
If mᵢ - avgᵢ₋₁ > X Then

        …perform fast adaptation (step 406--discussed
    below) …
    Else
        … perform slow adaptation (step 408--using a
    regular moving average technique) …
    EndIf
```

where "X" can be:

- a pre-set constant value,
- a function of the standard deviation if the traffic model is known, or a
- a function of the empirical variance if it can be measured.

In this situation, the token bucket 500 would be used to identify a significant "up" fluctuation whenever it became empty since the actual bit-rate would be significantly higher than the filling average (see FIGURE 5B) . And, the token bucket 500 would not be used to signify a significant "down" fluctuation when it becomes full because the actual bit-rate would be significantly lower than the filling average.

Moreover, in some cases, a sudden increase in the value of a traffic characteristic/parameter is of interest if the observed traffic characteristic/parameter passes a certain threshold during the initial jump. For instance, when admission or congestion control protocols are used then there is likely to be an interest to know when the measured bandwidth passes a certain threshold (of course, passing the threshold as part of normal traffic fluctuation should not be signalled). In these cases, the three exemplary significant "up" verification schemes described above would be further simplified because the behaviour of the average is not relevant when the measurements are below the threshold. In particular, the three exemplary significant "up" schemes would be simplified such that the quick adaptation step 406 would be performed if: (1) the measurement ($m_i$) passes the threshold plus a predetermined relative difference value x%; (2) the measurement ($m_i$) passes the threshold plus a predetermined absolute difference X value; and (3) the token bucket 500 became empty when the tokens 502 where filled into the queue/bucket at the constant rate of the predetermined threshold.

Referring back to FIGURE 4, if the value of the measured parameter ($m_i$) is not significantly different than the value of the average of previously measured parameters ($avg_{i-1}$) , then the value of the updated average of measured parameters ($avg_i$) would be slowly adapted to be closer to the value of the measured parameter ($m_i$) (steps 404 and 408). In one embodiment, this slow adaptation step 408 can be performed by using a traditional smooth moving averaging technique such as the SWMA technique or the EWMA technique. However, if there is a significant difference then the updated average value ($avg_i$) would be quickly adapted to the value of the currently measured parameter ($m_i$) (see step 406). In one embodiment, this quick adaptation step 406 can be achieved by assigning a higher weight to the newly measured traffic parameter ($m_i$) . The discussion provided next explains some of the different ways that the quick adaptation step 408 can be performed in accordance with the present solution.

If the SWMA technique is used, then one could quickly adapt the updated average ($avg_i$) to the value of the newly measured parameter ($m_i$) by flushing the stored n measurements cells and replacing each of them with the new measurement ($m_i$). In this way, the updated average ($avg_i$) would immediately jump to the new level but it will be smooth after that if there are no further significant differences. Exemplary pseudo code that accomplishes this is as follows:

```
If difference significant Then
    //Fill cells with the new value
    For i = 1 to n do
        Cell[i] = m_i
    EndFor

    avg_i = m_i

Else
    //Perform shifting the cells:
    For i = 1 to n-1 do
        Cell[i] = Cell[i+1]
    EndFor
    Cell[n] = m_i

    //Perform average calculation
    Sum = 0
    For i = 1 to n do
        Sum += Cell[i]
    EndFor
    avg_i = Sum / n

EndIf.
```

If the EWMA technique is used, then one could quickly adapt the updated average ($avg_i$) to the value of the newly measured parameter ($m_i$) by using a higher weight (ultimately even 1) for the newly measured parameter ($m_i$). Exemplary pseudo code that accomplishes this is as follows:

```
If difference significant Then
    avg_i = avg_{i-1} * (1.0 - w_adaptation) + m_i * w_adaptation
Else
    avg_i = avg_{i-1} * (1.0 - w_normal) + m_i * w_normal
EndIf.
```

where the values of $w_{normal}$ are typically 1/4, 1/8, 1/16, 1/32, and so on, and the value for $w_{adaptation}$ would be higher than $w_{normal}$ and typically it would be close to one, e.g., 1/2, 3/4, 7/8, ..., up to 1.

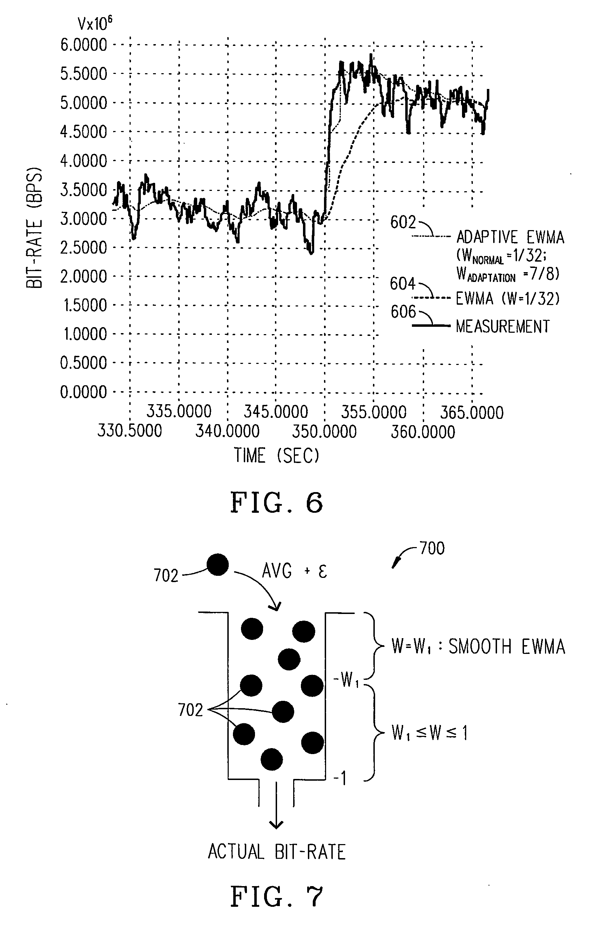

The behaviour of this enhanced EWMA technique using bandwidth measurements is demonstrated in the graph shown in FIGURE 6. In this simulation, the bandwidth measurements were made in accordance with a random (Poisson) session arrival model, where the sessions were on-off sources (e.g. like speech flows with voice activity detection). As can be seen, while the enhanced EWMA technique (see line 602) is just as smooth as the traditional EWMA technique (see line 604) it quickly jumped to the new load level of the actual measurement (see line 606) much faster than is possible with the traditional EWMA technique (see line 604).

Alternatively, for the measurement of bandwidth, link utilization and similar properties, a token bucket 700 like the one shown in FIGURE 7 could be used to set the weight parameter (w) of the traditional EWMA technique (step 408) and the enhanced EWMA technique (step 406). For instance, if the token bucket 700 is filled with tokens 702; then the EWMA weight (w) would be low to maintain a smooth average (see step 408). In contrast, if the token bucket 700 is missing some tokens 702 more than a threshold ($w_1$), then the EWMA weight (w) starts to increase until the token bucket 700 is empty in which case the weight (w) would be set to 1 (see step 406). In this way, the bigger fluctuations in the measured traffic characteristic/parameter can be accounted for by using a high EWMA weight such as (w) w=1/2, 3/4...1 (see step 406). And, the normal fluctuations of the measured traffic characteristic/parameter ($m_i$) can be smoothed by using a low EWMA weight (w) such as w=1/4, 1/8, 1/16, 1/32... (see step 408). As can be seen, the normal fluctuation occurs only up to a certain bucket size and below that the weight (w) starts to increase to realize a quicker adaptation for the bigger fluctuations.

From the foregoing, it should be appreciated that the present solution relates to a method that provides fast and exact traffic characteristics information during normal traffic fluctuations in the conditions of a network and also during a sudden and big change in the conditions of the network. The present solution is based on a moving average technique where if at some time the measured value of a traffic parameter is significantly higher or lower than the average of a previous measured traffic parameter, then the new measured value would be assigned a higher weight than normally so as to quickly adapt the updated average to the new level. This significant difference can be verified when the difference between the new measurement and the average of previous measurements is higher than a threshold (relative "x" or absolute "X"), or when a token bucket fills-up or runs out-off tokens.

Typically, the present solution would be used in a traffic monitoring tool or a QoS method based on traffic characteristics measurements. In a traditional traffic monitoring tool, a smoothed average of the measured traffic parameters was calculated and used to eliminate a slow congestion notification or termination of a traffic flow due to a "normal" traffic fluctuation. The main problem with this method is that the reaction time is relatively slow when network conditions change rapidly. In the present invention, an enhanced moving average technique is used that eliminates the slow congestion notification or termination of a traffic flow due to a "normal" traffic fluctuation and is also able to follow the sudden and big changes (e.g., load shifts due to a network element failures or other phenomena causing spikes in the figure). As a result, a quick change in the traffic characteristic can be indicated in the output, and may be used to effectively trigger alarms or warnings in real-time. Alternatively, a visualization tool/human interface 307 can also apply method 400 and/or show the results of method 400 to a person using a graphical program (e.g., Excel®) to illustrate the "small" and "big" changes in the traffic fluctuations. The visualization tool/human interface 307 is shown connected to the network management tool 306 but it could if desired be connected to anyone or all of the routers 302a, 302b, 302c and 302d and/or edge nodes 304a and 304b. The present solution has a number of advantages (for example):

- A traffic monitoring tool can use the present solution to filter (smooth) normal traffic fluctuation from bandwidth, delay or loss measurements. At the same time, the traffic monitoring tool can use the present invention to quickly show sudden and big changes of the measured property which would have taken a long time using the traditional smooth moving averaging techniques. Thus, the traffic monitoring tool is able to quickly detect failures in the network like when a noticeable part of the traffic is lost, or when a part of the network suddenly receives a much higher traffic load.

- The present solution could be applied in measurement-based admission and congestion control applications to quickly refuse new sessions or pre-empt existing sessions in response to re-routed traffic or mass calling while at the same time these applications can ignore the traffic fluctuations that are considered normal.

- The present invention could be applied in the network management system to quickly recognize failures, sudden changes of traffic characteristics or special events caused by spikes in the traffic characteristics (e.g., DoS attacks, mass calling, link or node failures which can result in the re-routing of packets).

- The present invention enables a high link utilization to be achieved because unnecessary congestion signals would be avoided which can be common when transporting bursty data traffic.

Lastly, it should be appreciated that there are many details associated with the exemplary IP network 300 and its' components described above which happen to be well known to those skilled in the industry. As such, for charity, the aforementioned description omitted those well known details about the exemplary IP network 300 and its' components which where not necessary to understand the present invention.

Although multiple embodiments of the present invention have been illustrated in the accompanying Drawings and described in the foregoing Detailed Description, it should be understood that the invention is not limited to the disclosed embodiments, but is also-capable of numerous rearrangements, modifications and substitutions without departing from the invention as set forth and defined by the following claims.

**Claims**

1. A method (400) for monitoring a parameter of traffic which is flowing within a communications network (300), said method comprising the steps of:

measuring (402) the parameter, $m_i$, of the traffic; and

determining (404) whether a value of the measured parameter, $m_i$, is different than a value of an average of previously measured parameters, $avg_{i-1}$, wherein said determining step uses a relative difference verification process which determines that the value of the measured parameter, $m_i$, is higher than the value of the average of previously measured parameters, $avg_{i-1}$, when the value of the measured parameter, $m_i$, is greater than the value of the average of the measured parameters, $avg_{i-1}$, multiplied by (1+x%) where "x" is a pre-set constant value, a function of a standard deviation of a known traffic model, or a function of an empirical variance;

if yes, quickly adapting (406) a value of an updated average of measured parameters, $avg_i$, to be closer to the value of the measured parameter, $m_i$; or

if no, slowly adapting (408) the value of the updated average of measured parameters, $avg_i$, to be closer to the value of the measured parameter, $m_i$.

2. The method of Claim 1, wherein said determining step further includes using the relative difference verification process which determines that the value of the measured parameter, $m_i$, is lower than the value of the average of previously measured parameters, $avg_{i-1}$, when the value of the measured parameter, $m_i$, is less than the value of the average of the measured parameters, $avg_{i-1}$, multiplied by (1-x%) where "x" is a pre-set constant value, a function of a standard deviation of a known traffic model, or a function of an empirical variance.

3. The method of Claim 1, wherein said determining step further includes using the relative difference verification process with a predetermined threshold which determines that the value of the measured parameter, $m_i$, is higher than the value of the average of previously measured parameters, $avg_{i-1}$, when 1) the value of the measured parameter, $m_i$, is greater than the predetermined threshold and 2) the value of the measured parameter, $m_i$, is greater than the value of the average of the measured prameters, $avg_{i-1}$, multiplied by (1+x%) where "x" is a pre-set constant value, a function of a standard deviation of a known traffic model, or a function of an empirical variance.

4. The method of Claim 1, wherein said step of quickly adapting the value of the updated average of measured parameters, $avg_i$, to be closer to the value of the measured parameter, $m_i$, further includes:

flushing the values of all of the previously measured parameters used to generate the value of the average of the previously measured parameters, $avg_{i-1}$;

replacing each of the flushed values of all of the previously measured parameters with the value of the measured parameter, $m_i$; and

implementing an enhanced sliding window moving average, SWMA, technique using the measured parameter, $m_i$, and the replaced value of the average of the previously measured parameters, $avg_{i-1}$.

5. The method of Claim 1, wherein said step of quickly adapting the value of the updated average of measured parameters, $avg_i$, to be closer to the value of the measured parameter, $m_i$, further includes implementing an enhanced exponentially weighted moving average, EWMA, technique where the value of the updated average of measured parameters, $avg_i$, is set equal to the value of the average of previously measured parameters, $avg_{i-1}$, multiplied by (1.0-$w_{adaptation}$) plus the value of the measured paramiater, $m_i$, multiplied by $w_{adaptation}$ where $w_{adaptation}$ is greater than $w_{normal}$ which would be used in the slowly adapting step.

6. The method of Claim 1, wherein said step of slowly adapting the value of the updated average of measured parameters, $avg_i$, to be closer to the value of the measured parameter, $m_i$, further includes implementing a traditional sliding window moving average, SWMA, technique where the updated average of measured parameters, $avg_i$, is calculated by averaging the value of the average of previously measured parameters, $avg_{i-1}$, and the value of the measured parameter, $m_i$.

7. The method of Claim 1, wherein said step of slowly adapting the value of the updated average of measured parameters, $avg_i$, to be closer to the value of the measured parameter, $m_i$, further includes implementing a traditional exponentially weighted moving average, EWMA, technique by setting the value of the updated average of measured paraineters, $avg_i$, equal to the value of the average of previously measured parameters, $avg_{i-1}$, multiplied by (1.0-$w_{normal}$) plus the value of the measured parameter, $m_i$, multiplied by $w_{normal}$ where $w_{normal}$ is less thank $w_{adapcation}$

which would be used in the quickly adapting step.

8. A network node (302a, 302b, 302c, 302d, 304a and 304b), comprising:

a traffic measurement function (308) that facilitates the following:

measuring (402) a parameter, $m_i$, of a traffic; and

determining (404) whether a value of the measured parameter, $m_i$, is different than a value of an average of previously measured parameters, $avg_{i-1}$, wherein said determining operation uses a relative difference verification process which determines that the value of the measured parameter, $m_i$, is higher than the value of the average of previously measured parameters, $avg_{i-1}$, when the value of the measured pararoeter, $m_i$, is greater than the value of the average of the measured parameters, $avg_{i-1}$, multiplied by (1+x%) where "x" is a pre-set constant value, a function of a standard deviation of a known traffic model, or a function of an empirical variance;

if yes, quickly adapting (406) a value of an update average of measured parameters, $avg_i$, to be closer to the value of the measured parameter, $m_i$; or

if no, slowly adapting (408) the value of the updated average of measured parameters, $avg_i$, to be closer to the value of the measured parameter, $m_i$.

9. The network node of Claim 8, wherein said determining operation further includes using the relative difference verification process which determines that the value of the measured parameter, $m_i$, is lower than the value of the average of previously measured parameters, $avg_{i-1}$, when the value of the measured parameter, $m_i$, is less than the value of the average of the measured parameters, $avg_{i-1}$, multiplied by (1-x%) where "x" is a pre-set constant value, a function of a standard deviation of a known traffic model, or a function of an empirical variance.

10. The network node of Claim 8, wherein said determining operation further includes using the relative difference verification process with a predetermine threshold which determines that the value of the measured parameter, $m_i$, is higher than the value of the average of previously measured parameters, $avg_{i-1}$, when 1) the value of the measured parameter, $m_i$, is greater than the predetermined threshold and 2) the value of the measured parameter, $m_i$, is greater than the value of the average of the measured parameters, $avg_{i-1}$, multiplied by (1+x%) where "x" is a pre-set constant value, a function of a standard deviation of a known traffic model, or a function of an empirical variance.

11. The network node of Claim 8, wherein said operation of quickly adapting the value of the updated average of measured Parameters, $avg_i$, to be closer to the value of the measured parameter, $m_i$, further includes:

flushing the values of all of the previously measured parameters used to generate the value of the average of the previously measured parameters, $avg_{i-1}$;

replacing each of the flushed values of all of the previously measured parameters with the value of the measured parameter, $m_i$; and

implementing an enhanced sliding window moving average, SWMA, technique using the measured parameter, $m_i$, and the replaced value of the average of the previously measured parameters, $avg_{i-1}$.

12. The network node of Claim 8, wherein said operation of quickly adapting the value of the updated average of measured parameters, $avg_i$, to be closer to the value of the measured parameter, $m_i$, further includes implementing an enhanced exponentially weighted moving average, EWMA, technique where the value of the updated average of measured parameters, $avg_i$, is set equal to the value of the average of previously measured parameters, $avg_{i-1}$, multiplied by (1.0-$w_{adaptation}$) plus the value of the measured parameter, $m_i$, multiplied by $w_{adaptation}$ where $w_{adapcacion}$ is greater than $w_{normal}$ which would be used in the slowly adapting step.

13. The network node of Claim, 8, wherein said operation of slowly adapting the value of the updated average of measured parameters, $avg_i$, to be closer to the value of the measured parameter, $m_i$, further includes implementing a traditional sliding window moving average, SWMA, technique where the updated average of measured parameters, $avg_i$, is calculated by averaging the value of the average of previously measured parameters and the value of the measured parameter, $m_i$.

14. The network node of Claim 8, wherein said step of slowly adapting the value of the updated average of measured parameters, $avg_i$, to be closer to the value of the measured parameter, $m_i$, further includes implementing a traditional exponentially weighted moving average, EWMA, technique by setting the value of the updated average of measured

parameters, $avg_i$, equal to the value of the average of previously measured parameters, $avg_{i-1}$, multiplied by (1.0-$w_{normal}$) plus the value of the measured parameter, $m_i$, multiplied by $w_{normal}$ where $w_{normal}$ is less than $w_{adaptation}$ which would be used in the quickly adapting step.

**15.** A visualization tool (307) comprising a human interface for displaying an output from a method that monitors a parameter of traffic which .is flowing within a communications network (300) by performing the following steps:

measuring (402) the parameter, $m_i$, of the traffic; and

determining (404) whether a value of the measured parameter, $m_i$, is different than a value of an average of previously measured parameters, $avg_{i-1}$, wherein said determining operation uses a relative difference verification process which determines that the value of the measured parameter, $m_i$, is higher than the value of the average of previously measured parameters, $avg_{i-1}$, when the value of the measured parameter, $m_i$, is greater than the value of the average of the measured parameters, $avg_{i-1}$, multiplied by (1+x%) where "x" is a pre-set constant value, a function of a standard deviation of a known traffic model, or a function of an empirical variance;

if yes, quickly adapting (406) a value of an updated average of measured parameters, $avg_i$, to be closer to the value of the measured parameter, $m_i$; or

if no, slowly adapting (408) the value of the updated average of measured parameters, $avg_i$, to be closer to the value of the measured parameter, $m_i$.

## Patentansprüche

**1.** Verfahren (400) zum Überwachen eines Parameters von Verkehr, der innerhalb eines Kommunikationsnetzes (300) fließt, wobei das Verfahren die folgenden Schritte umfasst:

Messen (402) des Parameters $m_i$ des Verkehrs; und

Bestimmen (404), ob ein Wert des gemessenen Parameters $m_i$ anders als ein Wert eines Mittels von vorher gemessenen Parametern $avg_{i-1}$ ist, wobei der Bestimmungsschritt einen relativen Differenzverifizierungsprozess verwendet, der bestimmt, dass der Wert des gemessenen Parameters $m_i$ höher als der Wer des Mittels von vorher gemessenen Parametern $avg_{i-1}$ ist, wenn der Wert des gemessenen Parameters $m_i$ größer als der Wert des Mittels der gemessenen Parameter $avg_{i-1}$ multipliziert mit (1 + x %) ist, wobei "x" ein vorgegebener konstanter Wert, eine Funktion einer Standardabweichung eines bekannten Verkehrsmodells oder eine Funktion einer empirischen Varianz ist;

schnelles Anpassen (406), wenn dies der Fall ist, eines Wertes eines aktualisierten Mittels von gemessenen Parametern $avg_i$, um dem Wert des gemessenen Parameters $m_i$ näher zu sein; oder

langsames Anpassen (408), wenn dies nicht der Fall ist, des Wertes des aktualisierten Mittels von gemessenen Parametern $avg_i$, um dem Wert des gemessenen Parameters $m_i$ näher zu sein.

**2.** Verfahren nach Anspruch 1, wobei der Bestimmungsschritt ferner ein Verwenden des relativen Differenzverifizierungsprozesses umfasst, der bestimmt, dass der Wert des gemessenen Parameters $m_i$ niedriger als der Wert des Mittels von vorher gemessenen Parametern $avg_{i-1}$ ist, wenn der Wert des gemessenen Parameters $m_i$ kleiner als der Wert des Mittels der gemessenen Parameter $avg_{i-1}$ multipliziert mit (1 - x %) ist, wobei "x" ein vorgegebener konstanter Wert, eine Funktion einer Standardabweichung eines bekannten Verkehrsmodells oder eine Funktion einer empirischen Varianz ist.

**3.** Verfahren nach Anspruch 1, wobei der Bestimmungsschritt ferner ein Verwenden des relativen Differentverifizierungsprozesses mit einer vorbestimmten Schwelle umfasst, welche bestimmt, dass der Wert des gemessenen Parameters $m_i$ höher als der Wert des Mittels von vorher gemessenen Parametern $avg_{i-1}$ ist, wenn 1) der Wert des gemessenen Parameters $m_i$ größer als die vorbestimmte Schwelle ist und 2) der Wert des gemessenen Parameters $m_i$ größer als der Wert des Mittels der gemessenen Parameter $avg_{i-1}$ multipliziert mit (1 + x %) ist, wobei "x" ein vorgegebener konstanter Wert, eine Funktion einer Standardabweichung eines bekannten Verkehrsmodells oder eine Funktion einer empirischen Varianz ist.

**4.** Verfahren nach Anspruch 1, wobei der Schritt des schnellen Anpassens des Wertes des aktualisierten Mittels von gemessenen Parametern $avg_i$, um dem Wert des gemessenen Parameters $m_i$ näher zu sein, ferner umfasst:

Ausräumen der Werte aller der vorher gemessenen Parameter, die verwendet werden, um den Wert des Mittels der vorher gemessenen Parameter $avg_{i-1}$ zu erzeugen;

Ersetzen jedes der ausgeräumten Werte aller der vorher gemessenen Parameter durch den Wert des gemessenen Parameters $m_i$; und

Implementieren eines verbesserten Verfahrens der gleitenden Mittelwerte mit Gleitfenster (SWMA) unter Verwendung des gemessenen Parameters $m_i$ und des ersetzten Wertes des Mittels der vorher gemessenen Parameter $avg_{i-1}$.

5.  Verfahren nach Anspruch 1, wobei der Schritt des schnellen Anpassens des Wertes des aktualisierten Mittels von gemessenen Parametern $avg_i$, um dem Wert des gemessenen Parameters $m_i$ näher zu sein, ferner ein Implementieren eines verbesserten Verfahrens der exponentiell gewichteten gleitenden Mittelwerte (EWMA) umfasst, wobei der Wert des aktualisierten Mittels von gemessenen Parametern $avg_i$ gleich dem Wert des Mittels von vorher gemessenen Parametern $avg_{i-1}$, multipliziert $m_i$ $(1,0 - w_{Aaptation})$ plus des Wertes des gemessenen Parameters $m_i$ multipliziert mit $w_{Adaptation}$ gesetzt wird, wobei $w_{Adaptation}$ größer als $w_{normal}$ ist, das im Schritt des langsamen Anpassens verwendet werden würde.

6.  Verfahren nach Anspruch 1, wobei der Schritt des langsamen Anpassens des Wertes des aktualisierten Mittels von gemessenen Parametern $avg_i$, um dem Wert des gemessenen Parameters $m_i$ näher zu sein, ferner ein Implementieren eines herkömmlichen Verfahrens der gleitenden Mittelwerte mit Gleitfenster (SWMA) umfasst, wobei das aktualisierte Mittel von gemessenen Parametern $avg_i$ durch Mittelwertbildung des Wertes des Mittels von vorher gemessenen Parametern $avg_{i-1}$ und des Wertes des gemessenen Parameters $m_i$ berechnet wird.

7.  Verfahren nach Anspruch 1, wobei der Schritt des langsamen Anpassens des Wertes des aktualisierten Mittels von gemessenen Parametern $avg_i$, um dem Wert des gemessenen Parameters $m_i$ näher zu sein, ferner ein Implementieren eines herkömmlichen Verfahrens der exponentiell gewichteten gleitenden Mittelwerte (EWMA) umfasst, indem der Wert des aktualisierten Mittels von gemessenen Parametern $avg_i$ gleich dem Wert des Mittels von vorher gemessenen Parametern $avg_{i-1}$ multipliziert mit $(1,0 - w_{normal})$ plus des Wertes des gemessenen Parameters $m_i$ multipliziert mit $w_{normal}$ gesetzt wird, wobei $w_{nozma}i$ kleiner als $w_{Adaptation}$ ist, das im Schritt des schnellen Anpassens verwendet werden würde.

8.  Netzknoten (302a, 302b, 302c, 302d, 304a und 304b), umfassend:

    eine Verkehrsmessfunktion (308), die Folgendes ermöglicht:
    Messen (402) des Parameters $m_i$ eines Verkehrs; und
    Bestimmen (404), ob ein Wert des gemessenen Parameters $m_i$ anders als ein Wert eines Mittels von vorher gemessenen Parametern $avg_{i-1}$ ist, wobei der Bestimmungsschritt einen relativen Differenzverifizierungsprozess verwendet, der bestimmt, dass der Wert des gemessenen Parameters $m_i$ höher als der Wert des Mittels von vorher gemessenen Parametern $avg_{i-1}$ ist, wenn der Wert des gemessenen Parameters $m_i$ größer als der Wert des Mittels der gemessenen Parameter $avg_{i-1}$ multipliziert mit $(1 + x \%)$ ist, wobei "x" ein vorgegebener konstanter Wert, eine Funktion einer Standardabweichung eines bekannten Verkehrsmodells oder eine Funktion einer empirischen Varianz ist;
    schnelles Anpassen (406), wenn dies der Fall ist, eines Wertes eines aktualisierten Mittels von gemessenen Parametern $avg_i$, um dem Wert des gemessenen Parameters $m_i$ näher zu sein; oder
    langsames Anpassen (408), wenn dies nicht der Fall ist, des Wertes des aktualisierten Mittels von gemessenen Parametern $avg_i$, um dem Wert des gemessenen Parameters $m_i$ näher zu sein.

9.  Netzknoten nach Anspruch 8, wobei der Bestimmungsvorgang ferner ein Verwenden des relativen Differenzverifizierungsprozesses umfasst, der bestimmt, dass der Wert des gemessenen Parameters $m_i$ niedriger als der Wert des Mittels von vorher gemessenen Parametern $avg_{i-1}$ ist, wenn der Wert des gemessenen Parameters $m_i$ kleiner als der Wert des Mittels der gemessenen Parameter $avg_{i-1}$ multipliziert mit $(1 - x \%)$ ist, wobei "x" ein vorgegebener konstanter Wert, eine Funktion einer Standardabweichung eines bekannten Verkehrsmodells oder eine Funktion einer empirischen Varianz ist.

10. Netzknoten nach Anspruch 8, wobei der der Bestimmungsvorgang ferner ein Verwenden des relativen Differenzverifizierungsprozesses mit einer vorbestimmten Schwelle umfasst, welche bestimmt, dass der Wert des gemessenen Parameters $m_i$ höher als der Wert des Mittels von vorher gemessenen Parametern $avg_{i-1}$ ist, wenn 1) der Wert des gemessenen Parameters $m_i$ größer als die vorbestimmte Schwelle ist und 2) der Wert des gemessenen Parameters $m_i$ größer als der Wert des Mittels der gemessenen Parameter $avg_{i-1}$ multipliziert mit $(1 + x \%)$ ist, wobei "x" ein vorgegebener konstanter Wert, eine Funktion einer Standardabweichung eines bekannten Verkehrsmodells oder eine Funktion einer empirischen Varianz ist.

**11.** Netzknoten nach Anspruch 8, wobei der Vorgang des schnellen Anpassens des Wertes des aktualisierten Mittels von gemessenen Parametern $avg_i$, um dem Wert des gemessenen Parameters $m_i$ näher zu sein, ferner umfasst:

Ausräumen der Werte aller der vorher gemessenen Parameter, die verwendet werden, um den Wert des Mittels der vorher gemessenen Parameter $avg_{i-1}$ zu erzeugen;
Ersetzen jedes der ausgeräumten Werte aller der vorher gemessenen Parameter durch den Wert des gemessenen Parameters $m_i$; und
Implementieren eines verbesserten Verfahrens der gleitenden Mittelwerte mit Gleitfenster (SWMA) unter Verwendung des gemessenen Parameters $m_i$ und des ersetzten Wertes des Mittels der vorher gemessenen Parameter $avg_{i-1}$.

**12.** Netzknoten nach Anspruch 8, wobei der Vorgang des schnellen Anpassens des Wertes des aktualisierten Mittels von gemessenen Parametern $avg_i$, um dem Wert des gemessenen Parameters $m_i$ näher zu sein, ferner ein Implementieren eines verbesserten Verfahrens der exponentiell gewichteten gleitenden Mittelwerte (EWMA) umfasst, wobei der Wert des aktualisierten Mittels von gemessenen Parametern $avg_i$ gleich dem Wert des Mittels von vorher gemessenen Parametern $avg_{i-1}$ multipliziert mit $(1,0 - w_{Aaptation})$ plus des Wertes des gemessenen Parameters $m_i$ multipliziert mit $w_{Adaptazion}$ gesetzt wird, wobei $w_{Adaptation}$ größer als $w_{normal}$ ist, das im Schritt des langsamen Anpassens verwendet werden würde.

**13.** Netznoten nach Anspruch 8, wobei der Vorgang des langsamen Anpassens des Wertes des aktualisierten Mittels von gemessenen Parametern $avg_i$, um dem Wert des gemessenen Parameters $m_i$ näher zu sein, ferner ein Implementieren eines herkömmlichen Verfahrens der gleitenden Mittelwerte mit Gleitfenster (SWMA) umfasst, wobei das aktualisierte Mittel von gemessenen Parametern $avg_i$ durch Mittelwertbildung des Wertes des Mittels von vorher gemessenen Parametern $avg_{i-1}$ und des Wertes des gemessenen Parameters $m_i$ berechnet wird.

**14.** Netzknoten nach Anspruch 8, wobei der Vorgang des langsamen Anpassens des Wertes des aktualisierten Mittels von gemessenen Parametern $avg_i$, um dem Wert des gemessenen Parameters $m_i$ näher zu sein, ferner ein Implementieren eines herkömmlichen Verfahrens der exponentiell gewichteten gleitenden Mittelwerte (EWMA) umfasst, indem der Wert des aktualisierten Mittels von gemessenen Parametern $avg_i$ gleich dem Wert des Mittels von vorher gemessenen Parametern $avg_{i-1}$ multipliziert mit $(1,0 - w_{normal})$ plus des Wertes des gemessenen Parameters $m_i$ multipliziert mit $w_{normal}$ gesetzt wird, wobei $w_{normal}$ kleiner als $w_{Adaptation}$ ist, das im Schritt des schnellen Anpassens verwendet werden würde.

**15.** Visualisierungstool (307), umfassend eine menschliche Schnittstelle zum Anzeigen einer Ausgabe von einem Verfahren, das einen Parameter von Verkehr, der innerhalb eines Kommunikationsnetzes (300) fließt, durch Ausführen der folgenden Schritte überwacht:

Messen (402) des Parameters $m_i$ des Verkehrs; und
Bestimmen (404), ob ein Wert des gemessenen Parameters $m_i$ anders als ein Wert eines Mittels von vorher gemessenen Parametern $avg_{i-1}$ ist, wobei der Bestimmungsschritt einen relativen Differenzverifizierungsprozess verwendet, der bestimmt, dass der Wert des gemessenen Parameters $m_i$ höher als das Mittel von vorher gemessenen Parametern $avg_{i-1}$ ist, wenn der Wert des gemessenen Parameters $m_i$ größer als der Wert des Mittels der gemessenen Parameter $avg_{i-1}$ multipliziert mit $(1 + x \%)$ ist, wobei "x" ein vorgegebener konstanter Wert, eine Funktion einer Standardabweichung eines bekannten Verkehrsmodells oder eine Funktion einer empirischen Varianz ist;
schnelles Anpassen (406), wenn dies der Fall ist, eines Wertes eines aktualisierten Mittels von gemessenen Parametern $avg_i$, um dem Wert des gemessenen Parameters $m_i$ näher zu sein; oder
langsames Anpassen (408), wenn dies nicht der Fall ist, des Wertes des aktualisierten Mittels von gemessenen Parametern $avg_i$, um dem Wert des gemessenen Parameters $m_i$ näher zu sein.

**Revendications**

**1.** Procédé (400) de surveillance d'un paramètre du trafic qui circule à l'intérieur d'un réseau de communication (300), ledit procédé comprenant les étapes consistant à :

mesurer (402) le paramètre, $m_i$, du trafic ; et
déterminer (404) si une valeur du paramètre mesuré, $m_i$, est différente d'une valeur d'une moyenne de paramètres précédemment mesurés, avgi-1, dans lequel ladite étape de détermination utilise un processus de vérification de différence relative qui détermine que la valeur du paramètre mesuré, $m_i$, est plus élevée que la valeur de la moyenne des paramètres précédemment mesurés, avgi-1, quand la valeur du paramètre mesuré, mi, est supérieure à la valeur de la moyenne des paramètres mesurés, avgi-1, multipliée par (1+x%) où « x » est une valeur constante pré-réglée, une fonction d'un écart standard d'un modèle de trafic connu ou une fonction d'une variance empirique ;

si oui, adapter rapidement (406) une valeur d'une moyenne mise à jour de paramètres mesurés, avg$_i$, afin d'être plus proche de la valeur du paramètre mesuré, mi ; ou

si non, adapter lentement (408) la valeur de la moyenne mise à jour des paramètres mesurés, avg$_i$, afin d'être plus proche de la valeur du paramètre mesuré, $m_i$.

2.  Procédé selon la revendication 1, dans lequel ladite étape de détermination inclut en outre d'utiliser le processus de vérification de différence relative qui détermine que la valeur du paramètre mesuré, mi, est inférieure à la valeur de la moyenne des paramètres précédemment mesurés, avgi-1, quand la valeur du paramètre mesuré, $m_i$, est inférieure à la valeur de la moyenne des paramètres mesurés, avgi-1, multipliée par (1-x%), où « x » est une valeur constante pré-réglée, une fonction d'un écart standard d'un modèle de trafic connu ou une fonction d'une variance empirique.

3.  Procédé selon la revendication 1, dans lequel ladite étape de détermination inclut en outre d'utiliser le processus de vérification de différence relative avec un seuil prédéterminé qui détermine que la valeur du paramètre mesuré, $m_i$, est plus élevée que la valeur de la moyenne des paramètres précédemment mesurés, avgi-1, quand 1, la valeur du paramètre mesuré, $m_i$, est supérieure au seuil prédéterminé et 2, la valeur du paramètre mesuré, mi, est supérieure à la valeur de la moyenne des paramètres mesurés, avgi-1, multipliée par (1+x%), où « x » est une valeur constante pré-réglée, une fonction d'un écart standard d'un modèle de trafic connu ou une fonction d'une variance empirique.

4.  Procédé selon la revendication 1, dans lequel ladite étape d'adaptation lente de la valeur de la moyenne mise à jour des paramètres mesurés, avg$_i$, afin d'être plus proche de la valeur du paramètre mesuré, $m_i$, inclut en outre de :

    éliminer les valeurs de tous les paramètres précédemment mesurés utilisés pour générer la valeur de la moyenne des paramètres précédemment mesurés, avgi-1 ;

    remplacer chacune des valeurs éliminées de tous les paramètres précédemment mesurés par la valeur du paramètre mesuré, $m_i$ ; et

    implémenter une technique moyenne glissante de fenêtre glissante améliorée, SWMA, en utilisant le paramètre mesuré, $m_i$, et la valeur remplacée de la moyenne des paramètres précédemment mesurés, avgi-1.

5.  Procédé selon la revendication 1, dans lequel ladite étape d'adaptation rapide de la valeur de la moyenne mise à jour des paramètres mesurés, avg$_i$, afin d'être plus proche de la valeur du paramètre mesuré, $m_i$, inclut en outre d'implémenter une technique de moyenne glissante pondérée améliorée exponentiellement, EWMA, où la valeur de la moyenne mise à jour des paramètres mesurés, avg$_i$, est réglée égale à la valeur de la moyenne des paramètres précédemment mesurés, avgi-1, multipliés par (1.0-wadaptation) plus la valeur du paramètre mesuré, $m_i$, multipliée par $W_{adaptation}$, où $W_{adaptation}$ est supérieur à $W_{normal}$ qui serait utilisé dans l'étape d'adaptation lente.

6.  Procédé selon la revendication 1, dans lequel ladite étape d'adaptation lente de la valeur de la moyenne mise à jour des paramètres mesurés, avg$_i$, afin d'être plus proche de la valeur du paramètre mesuré, $m_i$, inclut en outre d'implémenter une technique de moyenne glissante de fenêtre glissante traditionnelle, SWMA, où la moyenne mise à jour des paramètres mesurés, avg$_i$, est calculée en faisant la moyenne de la valeur de la moyenne des paramètres précédemment mesurés, avgi-1, et de la valeur du paramètre mesuré, $m_i$.

7.  Procédé selon la revendication 1, dans lequel ladite étape d'adaptation lente de la valeur de la moyenne mise à jour des paramètres mesurés, avg$_i$, afin d'être plus proche de la valeur du paramètre mesuré, $m_i$, inclut en outre d'implémenter une technique de moyenne glissante pondérée exponentiellement traditionnelle, EWMA, en réglant la valeur de la moyenne mise à jour des paramètres mesurés, avg$_i$, égale à la valeur de la moyenne des paramètres précédemment mesurés, avgi-1, multipliée par (1.0-w$_{normal}$) plus la valeur du paramètre mesuré, mi, multipliée par w$_{normal}$, on w$_{normal}$ est inférieur à w$_{adaptation}$ qui serait utilisée dans l'étape d'adaptation lente.

8.  Noeud de réseau (302a, 302b, 302c, 302d, 304a et 304b) comprenant :

    une fonction de mesure du trafic (308) qui facilite ce qui suit :

la mesure (402) d'un paramètre, $m_i$, du trafic ; et

la détermination (404) de ce que une valeur du paramètre mesuré, mi, est différente d'une valeur d'une moyenne de paramètres précédemment mesurés, avgi-1, dans lequel ladite opération de détermination utilise un processus de vérification de différence relative qui détermine que la valeur du paramètre mesuré, mi, est supérieure à la valeur de la moyenne des paramètres précédemment mesurés, avgi-1, quand la valeur du paramètre mesuré, mi, est supérieure à la valeur de la moyenne des paramètres mesurés, avgi-1, multipliée par (1+x%) où « x » est une valeur constante pré-réglée, une fonction d'un écart standard d'un modèle de trafic connu ou une fonction d'une variance empirique ;

si oui, adapter rapidement (406) une valeur d'une moyenne mise à jour de paramètres mesurés, $avg_i$, afin d'être plus proche de la valeur du paramètre mesuré, $m_i$ ; ou

si non, adapter lentement (408) la valeur de la moyenne mise à jour des paramètres mesurés, $avg_i$, afin d'être plus proche de la valeur du paramètre mesuré, $m_i$.

9. Noeud de réseau selon la revendication 8, dans lequel ladite opération de détermination inclut en outre d'utiliser le processus de vérification de différence relative qui détermine que la valeur du paramètre mesuré, mi, est inférieure à la valeur de la moyenne des paramètres précédemment mesurés, avgi-1, quand la valeur du paramètre mesuré, mi, est inférieure à la valeur de la moyenne des paramètres mesurés, avgi-1, multipliée par (1-x%), où « x » est une valeur constante pré-réglée, une fonction d'un écart standard d'un modèle de trafic connu ou une fonction d'une variance empirique.

10. Noeud de réseau selon la revendication 8, dans lequel ladite opération de détermination inclut en outre d'utiliser le processus de vérification de différence relative avec un seuil prédéterminé qui détermine que la valeur du paramètre mesuré, $m_i$, est supérieure à la valeur de la moyenne des paramètres précédemment mesurés, agi-1, quand 1, la valeur du paramètre mesuré, mi, est supérieure au seuil prédéterminé et 2, la valeur du paramètre mesuré, $m_i$, est supérieure à la valeur de la moyenne des paramètres mesurés, avgi-1, multipliée par (1+x%) où « x » est une valeur constante pré-réglée, une fonction d'un écart standard d'un modèle de trafic connu ou une fonction d'une variance empirique.

11. Noeud de réseau selon la revendication 8, dans lequel ladite opération d'adaptation rapide de la valeur de la moyenne mise à jour des paramètres mesurés, $avg_i$, afin d'être plus proche de la valeur du paramètre mesuré, $m_i$, inclut en outre de :

éliminer les valeurs de tous les paramètres précédemment mesurés utilisés pour générer la valeur de la moyenne des paramètres précédemment mesurés, avgi-1 ;

remplacer chacune des valeurs éliminées de tous les paramètres précédemment mesurés par la valeur du paramètre mesuré, $m_i$ ; et

implémenter une technique moyenne glissante de fenêtre glissante améliorée, SWMA, en utilisant le paramètre mesuré, $m_i$, et la valeur remplacée de la moyenne des paramètres précédemment mesurés, avgi-1.

12. Noeud de réseau selon la revendication 8, dans lequel ladite opération d'adaptation rapide de la valeur de la moyenne mise à jour des paramètres mesurés, $avg_i$, afin d'être plus proche de la valeur du paramètre mesuré, $m_i$, inclut en outre d'implémenter une technique de moyenne glissante pondérée exponentiellement traditionnelle, EWMA, en réglant la valeur de la moyenne mise à jour des paramètres mesurés, $avg_i$, égale à la valeur de la moyenne des paramètres précédemment mesurés, avgi-1, multipliée par (1.0-wnormal) plus la valeur du paramètre mesuré, $m_i$, multipliée par $w_{normal}$, on $w_{normal}$ est inférieur à $w_{adaptarion}$ qui serait utilisée dans l'étape d'adaptation lente.

13. Noeud de réseau selon la revendication 8, dans lequel ladite opération d'adaptation lente de la valeur de la moyenne mise à jour des paramètres mesurés, $avg_i$, afin d'être plus proche de la valeur du paramètre mesuré, $m_i$, inclut en outre d'implémenter une technique de moyenne glissante de fenêtre glissante traditionnelle, SWMA, où la moyenne mise à jour des paramètres mesurés, $avg_i$, est calculée en faisant la moyenne de la valeur de la moyenne des paramètres précédemment mesurés, avgi-1, et de la valeur du paramètre mesuré, $m_i$.

14. Noeud de réseau selon la revendication 8, dans lequel ladite étape d'adaptation lente de la valeur de la moyenne mise à jour des paramètres mesurés, $avg_i$, afin d'être plus proche de la valeur du paramètre mesuré, $m_i$, inclut en outre d'implémenter une de moyenne glissante pondérée exponentiellement traditionnelle, EWMA, en réglant la valeur de la moyenne mise à jour des paramètres mesurés, $avg_i$, égale à la valeur de la moyenne des paramètres précédemment mesurés, avgi-1, multipliée par (1.0-$w_{normal}$) plus la valeur du paramètre mesuré, mi, multipliée par $w_{normal}$, on $w_{normal}$ est inférieur à $w_{adaptation}$ qui serait utilisée dans l'étape d'adaptation lente.

**15.** Outil de visualisation (307) comprenant une interface humaine pour afficher une sortie d'un procédé qui surveille un paramètre du trafic qui circule à l'intérieur d'un réseau de communication (300) en effectuant les étapes suivantes consistant à :

mesurer (402) la paramètre, $m_i$, du trafic ; et
déterminer (404) si une valeur du paramètre mesuré, $m_i$, est différente d'une valeur d'une moyenne de paramètres précédemment mesurés, $avg_{i-1}$, dans lequel ladite opération de détermination utilise un processus de vérification de différence relative qui détermine que la valeur du paramètre mesuré, $m_i$, est supérieure à la valeur de la moyenne de paramètres précédemment mesurés, $avg_{i-1}$, quand la valeur du paramètre mesuré, $m_i$, est supérieure à la valeur de la moyenne des paramètres mesurés, $avg_{i-1}$, multipliée par $(1+x\%)$, où « x » est une valeur constante pré-réglée, une fonction d'un écart standard d'un modèle de trafic connu ou une fonction d'une variance empirique ;
si oui, adapter rapidement (406) une valeur d'une moyenne mise à jour des paramètres mesurés, $avg_i$, afin d'être plus proche de la valeur du paramètre mesuré, $m_i$ ; ou
si non, adapter lentement (408) la valeur de la moyenne mise à jour des paramètres mesurés, $avg_i$, afin d'être plus proche de la valeur du paramètre mesuré, $m_i$.

FIG. 1 (PRIOR ART)

FIG. 2 (PRIOR ART)

FIG. 3

400

MEASURE TRAFFIC PARAMETER —402

?
WHETHER MEASURED
PARAMETER IS SIGNIFICANTLY DIFFERENT THAN
AVERAGE OF PREVIOUSLY MEASURED
PARAMETERS —404

YES

NO

406

QUICKLY ADAPTING AN
UPDATED AVERAGE OF
MEASURED PARAMETERS
TO BE CLOSE TO
MEASURED PARAMETER

408

SLOWLY ADAPTING AN
UPDATED AVERAGE OF
MEASURED PARAMETERS
TO BE CLOSE TO
MEASURED PARAMETER

FIG. 4

500

502 — AVG + ε

502 —

ACTUAL BIT-RATE

FIG. 5A

500

502 — AVG - ε

502 —

ACTUAL BIT-RATE

FIG. 5B

FIG. 6

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006052174 A

- US 6333917 B1

**Non-patent literature cited in the description**

- **S. Blake.** An Architecture for Differentiated Services. *RFC 2475,* 1998
- **B. Brisco.** A Framework for Admission Control over DiffServ using Pre-Congestion Notification. *internet Draft, work in progress,* March 2006

- **M. Brunner.** Requirements for Signaling Protocols. *RFC3726,* April 2004
- **Papadopouli M. et al.** *Evaluation of Short-Term Traffic Forecasting Algorithms in Wireless Networks,* 03 April 2006